# EUROPEAN PATENT APPLICATION

(11) **EP 2 357 540 A1**
(43) Date of publication of application: **17.08.2011**
(21) Application number: 10250250.7
(22) Date of filing: 13.02.2010
(51) Int. Cl.: G05B 19/042, B64D 1/04

(54) **Control of safety critical operations**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A system wherein control of a safety-critical system operation is effected by sending a plurality of keywords via a low integrity transmission means.

## Description

This invention relates to systems configured to effect safety-critical operations, and the control thereof. By "safety critical operation" we mean an operation which would or foreseeably could have irreversible physical consequences. A non-limiting example is the release of a store (e.g. a bomb, missile or auxiliary fuel tank) from an aircraft.

Whilst the invention is particularly relevant to a system in a vehicle (by which we mean any moveable platform, whether on or beneath the ground, in or on water, in the air or in space) it may also find application in stationary apparatus, for example a land-based missile launcher, a security gate or other access-control apparatus (the irreversible change here being the breach of security implicit in permitting access), process plant, power generation plant or railway signalling.

Conventionally, safety-critical systems achieve high integrity or availability by duplicating (and sometimes triplicating or even quadruplicating) hardware elements and the communication paths between such elements, and by requiring that executive signals be delivered via different paths and agree with each other, or at least that a majority of such signals agree with each other.

This invention is based on the recognition that, so far as such signals are concerned, it matters not by how many paths the signals are delivered. What is important is that the executive signal is correctly received and verified. In the present invention this can be done via a single transmission path.

Thus, in a first aspect, the invention provides a system configured to effect control of a safety-critical operation by sending a plurality of keywords via a low integrity transmission means.

In particular the low-integrity transmission means may include a single or common transmission path. Thereby the number of transmission channels in the system (normally 2, 3 or 4) can be reduced to one for most or all of its length. This can enable a significant reduction in system complexity and cost.

The system may comprise a plurality of switches each selectively responsive to said keywords, operation of at least a majority of the switches being required to effect said control.

The switches may be arranged in series, for example with respect to a power supply or other executive signal for the said system operation.

There may be means for causing the switches to operate in a predetermined sequence. For example, a said keyword may be supplied to one said switch via a logic gate to which an output from another said switch is supplied.

A keyword may be sent to a said switch via a serial data bus. The same data bus may be used for all the keywords.

The system may be configured to provide local power to a said switch as part of a data signal containing the keyword.

The system may comprise a command portion and an operative portion, the keywords being stored at the command portion and sent to the operative portion when said control is to be effected. Alternatively the system may comprise a command portion and an operative portion, the keywords being decrypt keys for encrypted keywords stored in the operative portion, which portion comprises means for decrypting the keywords and supplying them to the switches.

Each switch may be configured to respond to a different said keyword.

Alternatively, a said switch may be configured to receive a plurality of said keywords and to compare them, operation of the switch depending on the result of the comparison. Each such switch may be individually addressable.

Further, the invention is particularly applicable to the control of safety critical operations in apparatus located remotely from a control station, for example in an unmanned aerial vehicle (UAV) or other vehicle. Thus the system may be a stores management system.

Thus in another aspect the invention provides a remotely-operable apparatus configured to execute a safety-critical operation and including means for receiving via a single transmission path an instruction or authorisation for said operation comprising a plurality of keywords.

In a further aspect it provides a controller for a remotely-operable apparatus configured to execute a safety-critical operation and including means for transmitting to the apparatus via a single transmission path an instruction or authorisation for said operation comprising a plurality of keywords.

The invention will now be described merely by way of example with reference to the accompanying drawings, wherein;
Figure 1 shows a conventional safety-critical system in an unmanned combat aerial vehicle "(UCAV)";
Figure 2 shows a safety-critical system according to the invention in a UCAV;
Figure 3 shows part of the system of Figure 2;
Figure 4 and 5 show implementation of two embodiments of the invention using the structure of Figure 3;
Figure 6 shows part of the structure of Figure 4 in more detail; and
Figure 7 shows modification to the embodiment of Figure 5.

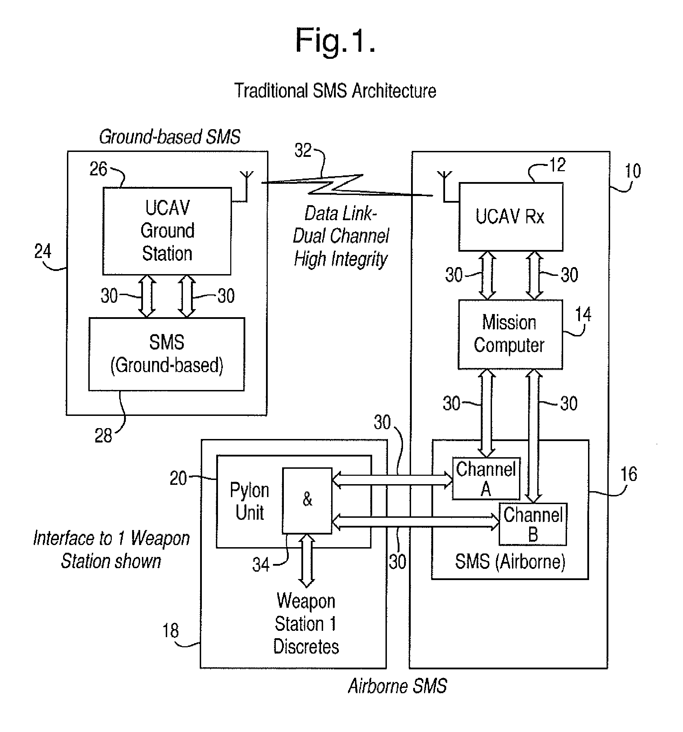

Referring to Figure 1, a conventional UCAV 10 comprises, so far as relevant here, a radio receiver 12 and a mission computer 14 which operates an airborne portion 16 of a stores management system (SMS). The SMS controls the operation and release of one or more stores (weapons) 18 mounted on an external pylon unit 20 of the UCAV. In the following description the store is assumed to be a releasable weapon, but it could equally be some other releasable device.

The UCAV is controlled by an operator at a ground station 24 which includes a transmitter 26, and in particular a ground based controller portion 28 of the SMS. The uncommanded release of any store by the UCAV would be a serious matter, and so the control of the SMS is effected by a safety-critical system in which each of the sub-units 12, 14, 16, 20 contain duplicated functional elements, and each is connected to the others by duplex communication paths 30, including a dual channel radio link 32 between the transmitter 12 and the receiver 26.

The communication paths are consolidated into a single path only at the interface between the pylon 20 and the store. Generally, SMS applications require a number of outputs (some safety critical) to be activated in a logical sequence to achieve a weapon release.

A typical release sequence of a store is as follows:-
- Weapon Selection Phase
   o Mission Computer requests SMS to select weapon.
   o Airborne SMS selects weapon and returns selection to Mission Computer.
   o SMS switches non-safety critical power to store (generally implemented by single power switch or relay drive in Pylon Unit).
   o Weapon performs Built-in-Test.
- Weapon Arming Phase
   o Ground Station Operator issues "weapon arming" command
   o SMS energies fire supplies (following relevant interlock checks).
   o SMS energises safety critical power to store (safety critical SMS output, generally implemented by two "in-series" upper/lower power switches).
- Weapon Release Phase
   o Ground Station Operator sanctions final release and issues "weapon release" command
   o SMS energises Release Consent (safety critical SMS output, generally implemented by two "in-series" upper/lower power switches).
   o SMS energises "Fire" output to Suspension & Release Equipment (safety critical SMS output, generally implemented by two "in-series" upper/lower power switches).

Thus in operation of the Figure 1 system, a safety-critical command is duplicated and sent via both channels 30, 32 from the SMS controller 28. If (but only if) both commands are well-received at a comparator 34 within the pylon 20 is the command executed. With this architecture, the entire system from the ground operator's inputs through to the pylon outputs to the store 18 has to be developed to the highest hardware and software integrity standards, e.g. DEF-STAN-00-55/56 Safety Integrity Level 4 or equivalent, with all that implies for complexity and cost.

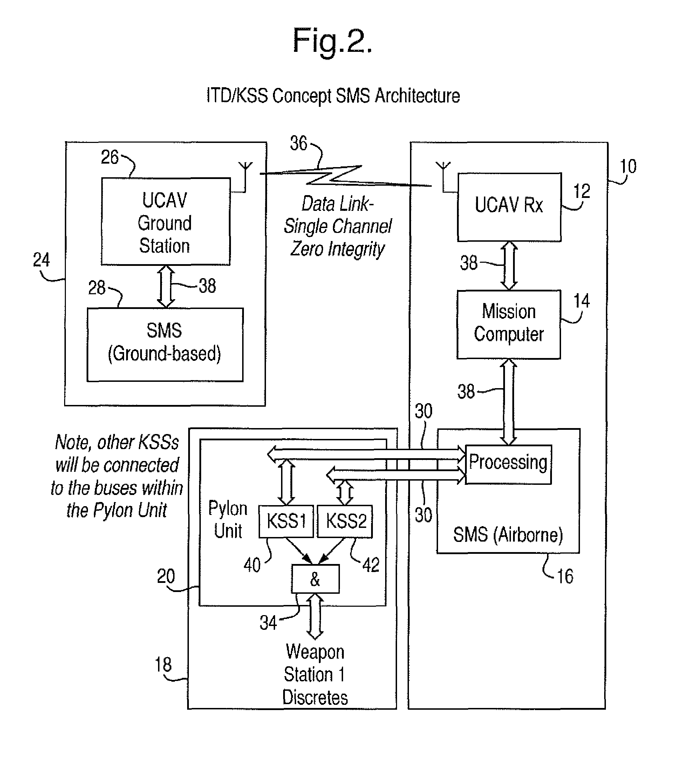

Figure 2 shows a system according to the invention which is similarly resistant to uncommanded release of the store, but which is much simpler than the system of Figure 1. Parts already described have the same reference numerals as in Figure 1.

In this embodiment, the ground-based SMS portion 28, the UCAV ground station 26, the UCAV receiver 12, the mission computer 14 and the airborne SMS portion 16 are configured and arranged to communicate with each other via only a single low integrity communication path 36, 38. The pylon unit contains two key-safe switches (KSS) 40, 42, each of which only changes to an active (closed) state when prompted with a respective unique keyword.

The outputs of the switches 40, 42 are compared in a comparator 34 as in Figure 1, and if they agree the comparator issues a safety-critical command to the store 18.

The keywords are stored securely in the ground-based portion of the SMS 28 and are retrieved and released only in response to procedurally-correct commands from the ground station operator. The storage, selection, retrieval and release elements of the ground-based SMS 28 are configured to safety-critical (high integrity or SIL4) standards, but the remainder of it together with the other elements of the system with the exception of the switch modules 40, 42 need have only lower integrity. The airborne portion of the SMS 16 is shown as providing separate communication paths 30 to each switch 40, 42, but it is possible to send the keywords to the switches via a common serial bus. This is especially convenient if there are more than two key-safe switches in the pylon unit. For example, each weapon may have an arming switch and a release switch, and indeed there probably will be more than one pylon. Thus there can be a significant number of key-safe switches in the SMS, each with its own unique password communicated to it over a common bus. Keywords for switches or operations which are not safety critical can be stored in the airborne SMS 16 rather than in the ground-based SMS, thereby reducing the amount of data to be sent through the single communications channel.

In this embodiment the system integrity level requirements would be as follows:

| **System element(s)** | Integrity Level |
|---|---|
| 1) Ground-based SMS (only the elements responsible for selection and retrieval of KSS codes) | DEF-STAN-00-55/56 SIL4 (or equivalent) |
| 2) KSS Modules | |
| Remainder of SMS (Ground-based & airborne) | DEF-STAN-00-55/56 SIL2 (or equivalent) |

In an alternative embodiment, all keywords for safety critical SMS outputs are held in the airborne SMS 16, as well as the keywords for non-safety critical outputs. The keywords for safety critical outputs however are held in encrypted form. Only the decrypt keys are held in the ground-based SMS 28. In operation the decrypt keys for safety-critical operations such as arming and release are sent by the ground-based SMS 28, and the keywords are decrypted in the airborne SMS 16. They are then applied to the switches 40, 42 as already described. The decrypt keys of course are sent only when commanded by the ground station operator, and thus until then the airborne SMS does not hold all the data necessary to effect release of the store. This embodiment requires certain aspects of the airborne SMS (e.g. control and erasure of the decrypt keys) to be of a high integrity level, but has the advantage of reduced data transfer from the ground-based SMS 28.

In this embodiment, the required integrity levels are;

| **System element(s)** | Integrity Level |
|---|---|
| 1) Ground-based SMS (only the elements responsible for selection and retrieval of KSS codes) | DEF-STAN-00-55/56 SIL4 (or equivalent) |
| 2) KSS Modules | |
| 3) Airborne SMS (only the elements associated with implementation of the "decrypt key"). | |
| Remainder of SMS (Ground-based & airborne) | DEF-STAN-00-55/56 SIL2 (or equivalent) |

In both embodiments the reduction in the integrity level of the majority of the SMS, coupled with the single-channel design of the system, can yield significant cost savings in the system design, development and subsequent manufacture. However, the concept still permits a reasoned safety case to be constructed (including consideration of a "logical sequence" of events to effect a release), to support the eventual certification of the system.

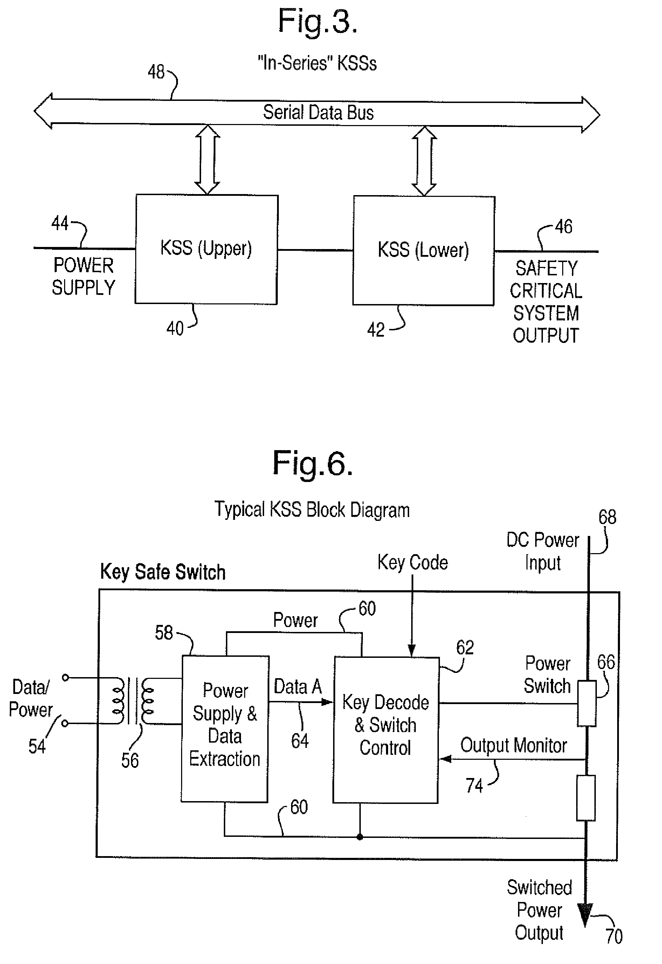

Figure 3 illustrates that the comparator function 34 can be achieved simply by connecting the switches 40, 42 in series with respect to a quantity to be controlled. Here, that quantity is a main power supply 44 which when the switches 40, 42 are closed is delivered at 46 (e.g. to the store release mechanism) as a safety critical system output. Also illustrated is the common serial data bus 48.

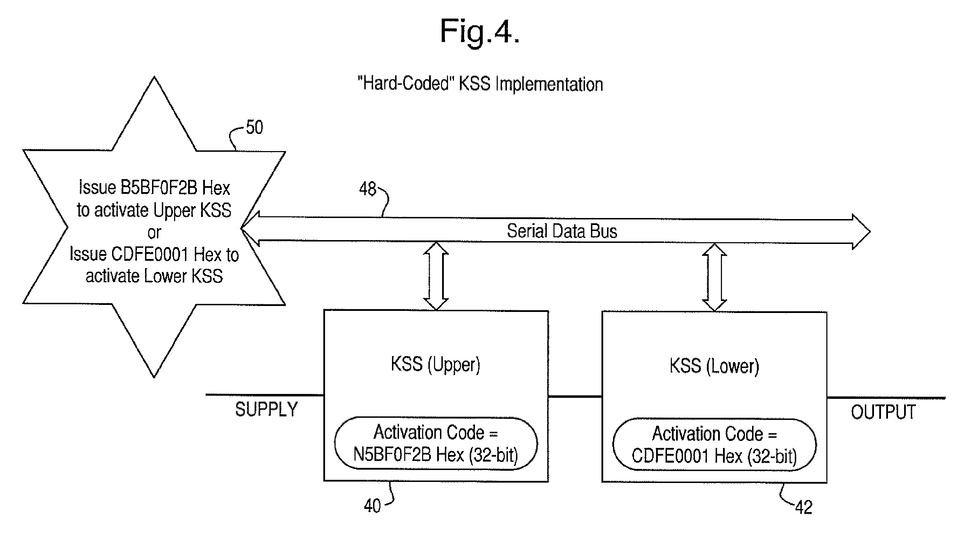

In Figure 4 there is shown an implementation of the Figure 3 embodiment. Activation keywords 50 issued by the ground based SMS 28 are delivered to the bus 48 and then to the switches 40, 42, each of which is hard (read-only) coded to respond to its respective keyword. Each switch also has a hard-coded deactivation keyword, for use if weapon release is aborted.

Each switch 40, 42 contains a processor for key comparison, which may be for example a dedicated microprocessor, programmable logic device or fixed mask device. The choice of device will depend on the particular application, especially operating temperature range and power requirements. Hard-coding of activation and deactivation keywords may be implemented by mechanical (e.g. DIL) switches, hard-wired links, internal or external memory devices or within a data register or permanent memory of the microprocessor.

The data bus 48 (which may be a general purpose serial data bus such as RS422 or USB) can be arranged to provide a local power supply to the switches as part of the data signal containing the keywords. Then, if no serial data is supplied to a particular switch, it will not be powered and will remain in a safe state.

As a further safety feature, signal isolation may be employed on the data bus inputs to:
- Prevent an external failure mode of a serial data bus resulting in an inadvertent switch operation.
- Provide a high degree of electromagnetic noise immunity.
- Maintain complete electrical isolation between control buses.

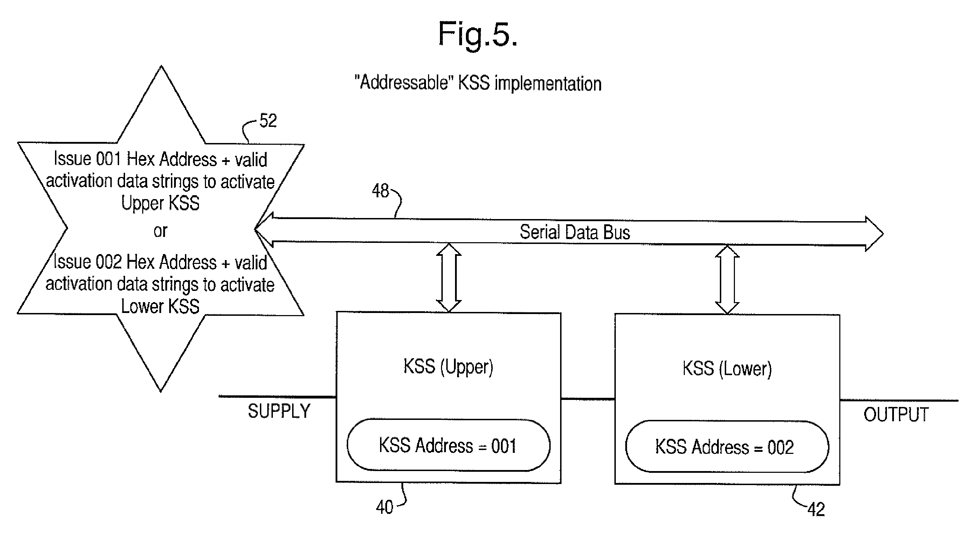

An advantage of the Figure 4 embodiment is that the switches connected to the common data bus do not need to be individually addressable, because each is actuated by a unique keyword. However, a disadvantage is that the switches are not interchangeable or replaceable without reprogramming the ground-based SMS 28 because each has its own code. This disadvantage can be eliminated by the embodiment of Figure 5.

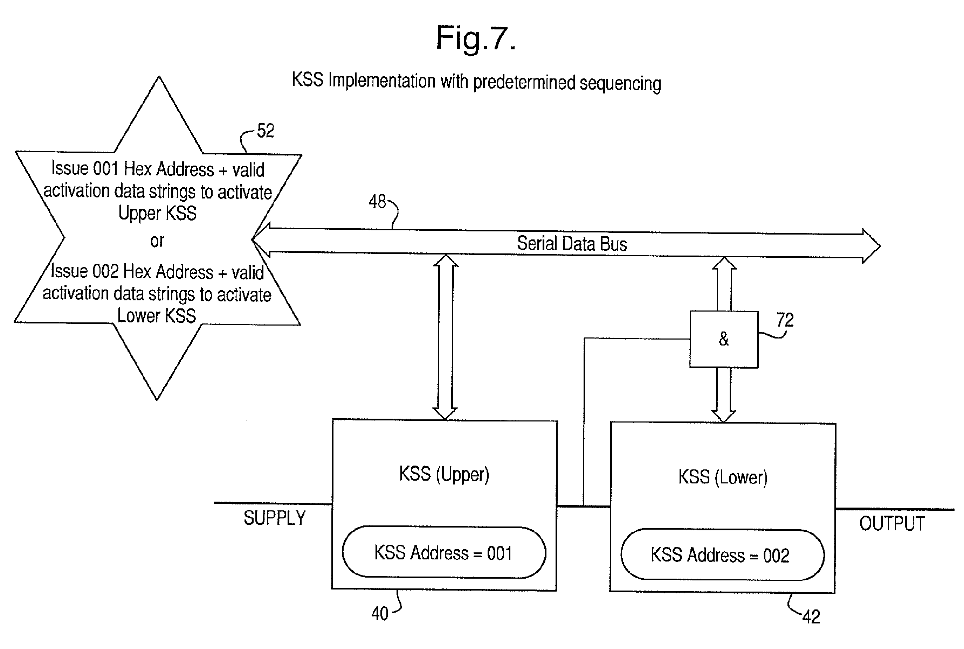

In this embodiment, each switch 40, 42 etc is uniquely addressable. If a switch is to be actuated, the ground-based SMS issues two (or more) respective long digital data strings 52 as keywords, together with the switch address. The addressed switch receives the keywords and compares them. If the comparison is valid, the switch is activated. The procedure is then repeated for other switches, as required. The correct sequential operation of the switches can be included as a further safety interlock, for example as shown in Figure 7 by supplying the data signal to the second switch 42 and similarly to subsequent switches (if present) via a respective AND gate 72 to which the output of the preceding switch 40 is also applied; this feature may also be included in the other embodiments.

It will be appreciated that in the Figure 5 embodiment, the actuation keywords do not need to be programmed into the switches, but only their respective addresses. This can be achieved by a separate addressing scheme, or each switch can be programmed with an address. Encryption can be employed as in the Figure 4 embodiment, the encrypted passwords for each switch being held in the airborne SMS.

Figure 6 shows one of the switches 40, 42 of Figure 4 in more detail. A combined data and power signal is received at 54 from the bus 48. The signal preferably is a differential drive signal, with the data encoded using a self-checking balanced Differential Manchester code. For initialisation of the switch the clock signal is first provided only with inert data. For safety critical applications the clock signal is only enabled once the relevant safety interlocks (e.g. that the UAV is in flight, and that the fire supply is activated) are confirmed as present.

The received data bus signal 54 is taken via an isolating transformer 56 to a data extraction and power supply unit 58 where the data component is extracted from the encoded data signal. The data signal is also rectified and regulated to provide a local power supply 60 for a switching element 62 to which the extracted data 64 is supplied from the data extraction unit 58. The switching element 62 compares the keyword in the extracted data with its previously programmed-in keyword, and if they concur, the switching element commands a power switch 66 (e.g. a power transistor or a solid state relay) to close and supply main DC input power 68 to a switched power output 70. A feedback link 74 confirms to the switching element 62 that the power switch has closed.

The topology of a key-safe switch for use in the Figure 5 embodiment is similar; the switching element in that case is configured to be addressable, and to receive and compare two or more keywords rather than to compare a received keyword with a keyword previously programmed into it.

Further, each key safe switch can include intelligent features e.g. user programmable switch-on period or single-shot operation.

For non-safety critical switching tasks, a single key safe switch may be used, instead of two or more in a cascaded or voting arrangement.

Although a common data bus 48 is preferred for reasons of simplicity and cost, more than one bus may be employed for greater integrity and availability, each serving a single switch or group of switches.

The invention also includes any novel feature or combination of features herein disclosed, whether or not specifically claimed.

## Claims

1. A system configured to effect control of a safety-critical operation by sending a plurality of keywords via a low integrity transmission means.

2. The system of claim 1 wherein the low integrity transmission means comprises a common transmission path for the keywords.

3. The system of claim 1 or claim 2 comprising a plurality of switches each selectively responsive to said keywords, operation of at least a majority of the switches being required to effect said control.

4. The system of claim 4 wherein the switches are arranged in series with respect to a power supply or other executive signal for the said system operation.

5. The system of claim 4 comprising means for causing the switches to operate in a predetermined sequence

6. The system of any of claims 3, 4 or 5 wherein a said keyword is sent to a said switch via a serial data bus.

7. The system of any preceding claim configured to provide local power to the switch from a data signal containing the keyword.

8. The system of any preceding claim comprising a command portion and an operative portion, the keywords being stored at the command portion and sent to the operative portion when said control is to be effected.

9. The system of any of claims 1 to 7 comprising a command portion and an operative portion, the keywords being decrypt keys for encrypted keywords stored in the operative portion, which portion comprises means for decrypting the keywords and supplying them to the switches.

10. The system of claim 3 or any claim dependent therefrom, wherein each switch is configured to respond to a different said keyword.

11. The system of claim 8 or claim 9 when dependent from claim 3, wherein a said switch is configured to receive a plurality of said keywords and to compare them, operation of the switch depending on the result of the comparison.

12. The system of claim 11, wherein each said switch is individually addressable.

13. The system of any preceding claim, being a stores management system or other system configured to be at least partially embodied in an unmanned aerial vehicle or other vehicle.

14. A remotely-operable apparatus configured to execute a safety-critical operation and including means for receiving via a single transmission path an instruction or authorisation for said operation comprising of a plurality of keywords.

15. A controller for a remotely-operable apparatus configured to execute a safety-critical operation and including means for transmitting to the apparatus via a single transmission path an instruction or authorisation for said operation comprising a plurality of keywords.
